# EUROPÄISCHE PATENTANMELDUNG

(11) **EP 4 714 734 A1**
(43) Veröffentlichungstag der Anmeldung: **25.03.2026**
(21) Anmeldenummer: 25200110.2
(22) Anmeldetag: 04.09.2025
(51) Int. Cl.: B60N 2/02, B29C 43/18, B60N 2/56, B60N 2/70

(54) **VERFAHREN ZUR HERSTELLUNG EINES POLSTERELEMENTS AUS WENIGSTENS EINEM FASERVLIESELEMENT UND MIT EINEM POLSTERHEIZELEMENT, FAHRZEUGSITZ MIT EINEM SOLCHEN POLSTERELEMENT UND FAHRZEUG MIT EINEM SOLCHEN FAHRZEUGSITZ**

(30) Priorität: 20.09.2024 DE 102024127186
(71) Anmelder: AUDI Aktiengesellschaft, 85057 Ingolstadt (DE)
(72) Erfinder: Ellermann, Lars, 74189 Weinsberg (DE); Ross, Steffen, 85139 Wettstetten (DE)

(57) **Zusammenfassung**

Beschrieben wird ein Verfahren (500) zum Herstellen eines Polsterelements (10) eines Fahrzeugsitzes (30), umfassend die Schritte: Bereitstellen (S501) von wenigstens einem plattenartigen Faservlieselement (12); Einlegen (S502) von dem wenigstens einen Faservlieselement (12) in ein Umformwerkzeug (50); Anordnen (S503) von einem elektrischen Polsterheizelement (14) mit wenigstens einem elektrischen Stecker (16) in dem Umformwerkzeug (50), wobei der elektrische Stecker (16) und zumindest ein Abschnitt (18) eines mit dem elektrischen Stecker (16) verbundenen elektrischen Kabels (18k) in einer im Umformwerkzeug (50) ausgebildeten, gesonderten Kavität (52) aufgenommen wird; Schließen (S504) des Umformwerkzeugs (50), wobei das Polsterheizelement (14) auf dem wenigstens einer Faservlieselement (12) angeordnet ist oder wird; Aufquellen und Umformen (S505) des wenigstens einen Faservlieselements (12) unter Einfluss von erhöhtem Druck und erhöhter Temperatur, wobei das Polsterheizelement (14) materialschlüssig mit dem wenigstens einen Faservlieselement (12) verbunden wird; Öffnen (S506) des Umformwerkzeugs (50) und Entnehmen des umgeformten Polsterelements (10) mit dem damit verbundenen Polsterheiz-element (14), wobei der elektrische Stecker (16) und der Abschnitt (18) des elektrischen Kabels (18k) frei beweglich an dem Polsterelement (10) angeordnet sind. Ferner werden ein Fahrzeugsitz mit einem solchen Polsterelement und ein Kraftfahrzeug mit einem solchen Fahrzeugsitz beschrieben.

## Beschreibung

Die Erfindung betrifft ein Verfahren zur Herstellung eines Polsterelements eines Fahrzeugsitzes, einen Fahrzeugsitz mit wenigstens einem solchen Polsterelement und ein Kraftfahrzeug mit wenigstens einem solchen Fahrzeugsitz.

Aktuell gibt es aufgrund von Nachhaltigkeitsgründen Bestrebungen, Polsterelemente aus Fasermaterialien herzustellen, um geschäumte Kunststoffe vermeiden zu können. Bei Polsterelemente aus geschäumten Kunststoffmaterialien wird ein Polsterheizelement, das auch als Sitzheizung bezeichnet werden kann, als gesondertes Element in einem separaten Verarbeitungsschritt auf dem fertig umgeformten geschäumten Polsterelement angebracht und mit diesem verklebt.

Zum Stand der Technik wird beispielweise auf die DE 10 2010 005 994 A1 und DE 698 13 691 T2 hingewiesen.

Die der Erfindung zu Grunde liegende Aufgabe wird darin gesehen, ein Verfahren zur Herstellung eines Polsterelements aus wenigstens einem Faservlieselement mit einem Polsterheizelement anzugeben, bei dem ein nachträgliches Anbringen des Polsterheizelements vermieden werden kann.

Diese Aufgabe wird gelöst durch ein Verfahren, einen Fahrzeugsitz und ein Kraftfahrzeug mit den Merkmalen des jeweiligen unabhängigen Patentanspruchs. Vorteilhafte Ausgestaltungen mit zweckmäßigen Weiterbildungen sind in den abhängigen Patentansprüchen angegeben.

Vorgeschlagen wird also ein Verfahren zum Herstellen eines Polsterelements eines Fahrzeugsitzes, umfassend die Schritte:
Bereitstellen von wenigstens einem plattenartigen Faservlieselement; Einlegen von dem wenigstens einen Faservlieselement in ein Umformwerkzeug; Anordnen von einem elektrischen Polsterheizelement mit wenigstens einem elektrischen Stecker in dem Umformwerkzeug, wobei der elektrische Stecker und zumindest ein Abschnitt eines mit dem elektrischen Stecker verbundenen elektrischen Kabels in einer im Umformwerkzeug ausgebildeten, gesonderten Kavität aufgenommen wird; Schließen des Umformwerkzeugs, wobei das Polsterheizelement auf dem wenigstens einer Faservlieselement angeordnet ist oder wird; Aufquellen und Umformen des wenigstens einen Faservlieselements unter Einfluss von erhöhtem Druck und erhöhter Temperatur, insbesondere durch Einspritzen von einem dampfförmigen Fluid, insbesondere Wasserdampf, wobei das Polsterheizelement materialschlüssig mit dem wenigstens einen Faservlieselement verbunden wird; Öffnen des Umformwerkzeugs und Entnehmen des umgeformten Polsterelements mit dem damit verbundenen Polsterheizelement, wobei der elektrische Stecker und der Abschnitt des elektrischen Kabels aus der gesonderten Kavität entnommen werden und frei beweglich an dem Polsterelement angeordnet sind.

Da bei einem solchen Verfahren kein flüssiges, insbesondere zu schäumendes Kunststoffmaterial eingesetzt wird, kann mittels der gesonderten Kavität die elektrische Steckverbindung des Polsterheizelements während des Umformens des Polsterelements in dem Umformwerkzeug verbleiben, so dass das vollständige Polsterheizelement beim Umformen des Polsterelements mit diesem auch gleich verbunden werden kann. Somit erübrigt sich ein gesondertes Anbringen bzw. Aufkleben des Polsterheizelements nach dem Umformen des Polsterelements.

Bei dem Verfahren kann das Polsterheizelement einen mit dem elektrischen Stecker und dem Abschnitt des elektrischen Kabels verbundenen Heizdraht aufweisen, wobei der Heizdraht auf einem Heizdrahtträgerelement angeordnet ist, und wobei das Heizdrahtträgerelement auf dem wenigstens einen Faservlieselement in das Umformwerkzeug eingelegt wird.

Das Heizdrahtträgerelement kann beispielweise ein flächiges Faservlies sein, an dem bzw. in dem der Heizdraht insbesondere schleifenartige bzw. mäandrierend vorgesehen ist. Alternativ kann ein schleifenartiger bzw. mäandrierender Heizungsdraht auch auf einem Klebestreifen angeordnet sein, der als Heizdrahtträgerelement dient.

Bei dem Verfahren kann das wenigstens eine Faservlieselement oder/und das Heizdrahtträgerelement eine Beschichtung aus einem temperaturaktivierbarem oberflächlich klebenden Material aufweisen, derart, dass das Heizdrahtträgerelement und das wenigstens eine Faservlieselement in dem geschlossenen Umformwerkzeug materialschlüssig miteinander verbunden werden, insbesondere verklebt werden.

Dabei kann zum Aktivieren der Beschichtung aus klebendem Material ein Wärmeeintrag in dem Umformwerkzeug erfolgen, beispielweise durch eine sowieso für den Umformprozess des Polsterelements benötigte Erhöhung der Temperatur in dem Umformwerkzeug.

Bei dem Verfahren kann alternativ oder ergänzend zum Aktivieren der Beschichtung aus klebendem Material der elektrische Stecker des Polsterheizelements mit einer in der gesonderten Kavität angeordneten elektrischen Buchse elektrisch verbunden werden, wobei der Heizdraht während des Umformens von Strom durchflossen und erwärmt wird. Hierdurch kann im Bereich des Polsterheizelements bzw. des Heizdrahts lokal gezielt ein bestimmtes Temperaturniveau erreicht werden, das die materialschlüssige Verbindung zwischen Heizdrahtträgerelement und Polsterelement ermöglicht bzw. unterstützt.

Bei dem Verfahren kann gemäß einer Alternative das Polsterheizelement einen mit dem elektrischen Stecker und dem Abschnitt des elektrischen Kabels verbundenen Heizdraht aufweisen, wobei der Heizdraht bei geöffnetem Umformwerkzeug an einer Werkzeughälfte des Umformwerkzeugs fixiert wird, insbesondere mittels mehrerer Fixierdorne. Beispielsweise kann das wenigstens eine Faservlieselement in einer unteren Werkzeughälfte angeordnet werden und der Heizdraht kann in einer oberen Werkzeughälfte angeordnet werden, so dass der Heizdraht beim Schließen der Werkzeughälften auf dem wenigstens einen Faservlieselement angeordnet wird.

Dabei kann der Heizdraht beim Schließen des Umformwerkzeugs unmittelbar auf dem wenigstens einen Faservlieselement angeordnet werden und materialschlüssig mit diesem verbunden werden. Das Verfahren kann in einem solchen Fall also ohne ein Heizdrahtträgerelement durchgeführt werden.

Bei dem Verfahren kann der elektrische Stecker des Polsterheizelements mit einer in der Kavität angeordneten elektrischen Buchse elektrisch verbunden werden, wobei der Heizdraht während des Umformens von Strom durchflossen und erwärmt wird, insbesondere derart, dass der Heizungsdraht eine Temperatur aufweist, die größer ist als eine Schmelztemperatur des wenigstens einen Faservlieselements. Anders ausgedrückt wird der das Faservlieselement kleinräumig aufschmelzende Heizdraht unmittelbar mit dem Faservlieselement materialschlüssig verbunden bzw. in dieses integriert.

Vorgeschlagen wird auch ein Fahrzeugsitz mit wenigstens einem Polsterelement, das entsprechend dem oben beschriebenen Verfahren hergestellt worden ist, wobei das Polsterelement mit Polsterheizelement ein Sitz-polster oder/und ein Rückenpolster oder/und ein Wangenpolster ist. Als Wangenpolster kann beispielsweise eine seitliche Beinführung im Bereich des Sitzpolsters oder eine seitliche Körperführung im Bereich des Rückenpolsters verstanden werden.

Ferner wird auch ein Kraftfahrzeug mit wenigstens einem solchen Fahrzeugsitz vorgeschlagen.

Weitere Vorteile und Einzelheiten der Erfindung ergeben sich aus der nachfolgenden Beschreibung von Ausführungsformen unter Bezugnahme auf die Figuren. Dabei zeigt:
- Fig. 1: anhand von vereinfachten Schnittansichten ein Verfahren zur Herstellung von einem Polsterelement eines Fahrzeugsitzes;
- Fig. 2: vereinfachte und schematische Draufsichten auf Polsterheizelemente mit und ohne Heizdrahtträgerelement;
- Fig. 3: anhand von vereinfachten Schnittansichten ein leicht modifiziertes Verfahren zur Herstellung von einem Polsterelement eines Fahrzeugsitzes;
- Fig. 4: eine vereinfachte Draufsicht auf ein Polsterelement mit Polsterheizelement sowie schematisch einen Fahrzeugsitz und ein Kraftfahrzeug.

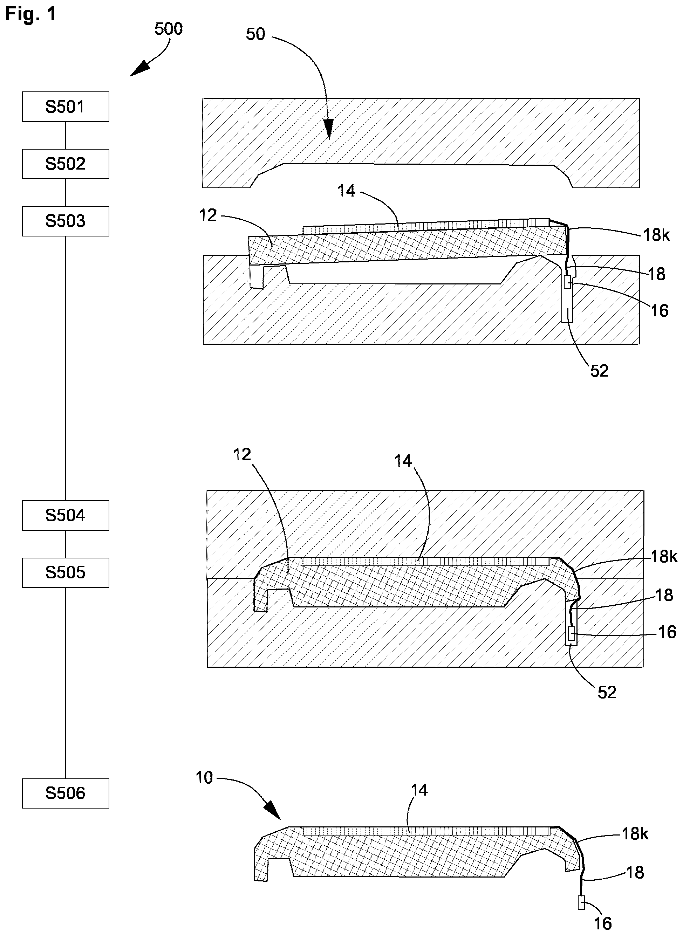

In Fig. 1 ist in einem vereinfachten und schematischen Diagramm ein Verfahren 500 zur Herstellung eines Polsterelements 10 gezeigt.

Gemäß einem Schritt S501 erfolgt ein Bereitstellen von wenigstens einem plattenartigen Faservlieselement 12, wobei das Faservlieselement gemäß einem Schritt S502 ein Umformwerkzeug 50 eingelegt wird.

Es wird in diesem Zusammenhang darauf hingewiesen, dass in das Umformwerkzeug auch mehrere plattenartige Faservlieselemente 12 übereinander angeordnet sein können, aus denen dann das umgeformte Polsterelement 10 hergestellt wird.

Gemäß einem Schritt S503 erfolgt ein Anordnen von einem elektrischen Polsterheizelement 14 mit wenigstens einem elektrischen Stecker 16 in dem Umformwerkzeug 50, wobei der elektrische Stecker 16 und zumindest ein Abschnitt 18 eines mit dem elektrischen Stecker 16 verbundenen elektrischen Kabels 18k in einer im Umformwerkzeug 50 ausgebildeten, gesonderten Kavität 52 aufgenommen wird.

Gemäß einem Schritt S504 erfolgt ein Schließen des Umformwerkzeugs 50, wobei das Polsterheizelement 14 auf dem wenigstens einer Faservlieselement 12 angeordnet ist oder wird.

Gemäß einem Schritt S505 erfolgt ein Aufquellen und Umformen des wenigstens einen Faservlieselements 12 unter Einfluss von erhöhtem Druck und erhöhter Temperatur, insbesondere durch Einspritzen von einem dampfförmigen Fluid, insbesondere Wasserdampf, wobei das Polsterheizelement 14 materialschlüssig mit dem wenigstens einen Faservlieselement 12 verbunden wird.

Gemäß einem Schritt S506 erfolgt ein Öffnen des Umformwerkzeugs 50 und Entnehmen des umgeformten Polsterelements 10 mit dem damit verbundenen Polsterheizelement 14, wobei der elektrische Stecker 16 und der Abschnitt 18 des elektrischen Kabels 18k aus der gesonderten Kavität 52 entnommen werden und frei beweglich an dem Polsterelement 12 angeordnet sind.

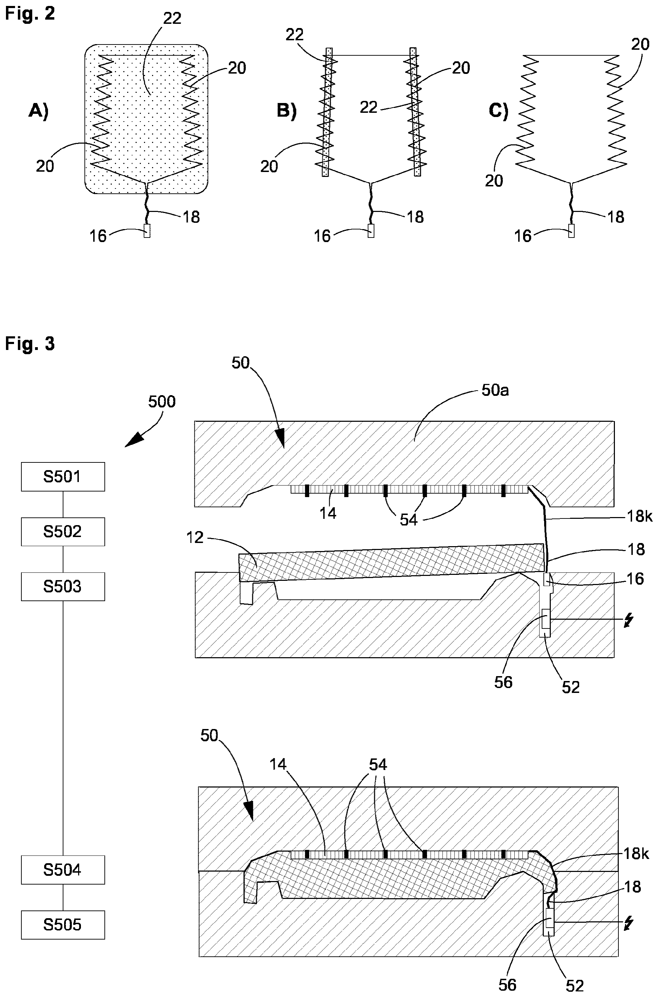

In Fig. 2 sind vereinfacht mögliche Ausgestaltungen des Polsterheizelements 14 dargestellt. Jedes der Polsterheizelemente 14 weist einen mit dem elektrischen Stecker 16 und dem Abschnitt 18 des elektrischen Kabels 18k verbundenen Heizdraht 20 auf. Der Heizdraht ist hier vereinfacht zick-zack-artig dargestellt. Der Heizdraht 20 kann aber auch in Windungen, Schleifen oder sonstigen Verläufen, etwa mäandrierend, ausgebildet sein.

Aus den Fig. 2A und 2B ist ersichtlich, dass der Heizdraht 20 auf einem Heizdrahtträgerelement 22 angeordnet ist. Im Beispiel der Fig. 2A ist das Heizdrahtträgerelement 22 als flächiges Faservlies ausgebildet. Im Beispiel der Fig. 2B wird das Heizdrahtträgerelement 22 durch zwei Streifen, insbesondere Klebestreifen gebildet, auf denen längere Abschnitte des Heizdrahts 20 angeordnet sind.

Bei dem in Fig. 1 gezeigten Verfahren 500 können Polsterheizelemente 14 mit einem Heizdrahtträgerelement 22 (Fig. 2A, 2B) in dem Schritt S503 so in das Umformwerkzeug 50 eingelegt werden, dass das Heizdrahtträgerelement 22 auf dem wenigstens einen Faservlieselement 12 aufliegt. Anders ausgedrückt kann das Polsterheizelement 14 mit Heizdrahtträgerelement 22 auf eine oberste Schicht von Faservlieselementen 12 angeordnet werden.

Das bei dem Verfahren 500 verwendete wenigstens eine Faservlieselement 12 oder/und das Heizdrahtträgerelement 22 (Fig. 2A, 2B) kann eine Beschichtung aus einem temperaturaktivierbarem oberflächlich klebenden Material aufweisen, derart, dass das Heizdrahtträgerelement 22 und das wenigstens eine Faservlieselement 12 in dem geschlossenen Umformwerkzeug 50 materialschlüssig miteinander verbunden werden, was insbesondere in dem Schritt S505 erfolgt. Dabei erfolgt bei dem Schritt S505 zum Aktivieren der Beschichtung aus klebendem Material ein Wärmeeintrag in dem Umformwerkzeug 50.

In Fig. 3 ist das Verfahren 500 der Fig. 1 zumindest teilweise nochmals dargestellt, wobei hier ein Polsterheizelement 14 gemäß Fig. 2C eingesetzt wird, das den mit dem elektrischen Stecker 16 und dem Abschnitt 18 des elektrischen Kabels 18k verbundenen Heizdraht 20 aufweist, aber kein Heizdrahtträgerelement 22. Bei dem Schritt S503 wird das Polsterheizelement in das Umformwerkzeug eingeführt, wobei in diesem Beispiel der Heizdraht 20 bei geöffnetem Umformwerkzeug 50 an einer, hier oberen Werkzeughälfte 50a des Umformwerkzeugs 50 fixiert wird, insbesondere mittels mehrere Fixierdorne 54. Dabei wird der Heizdraht 20 des Polsterheizelements 14 beim Schließen (S504) des Umformwerkzeugs 50 unmittelbar auf dem wenigstens einen Faservlieselement 12 angeordnet und materialschlüssig mit diesem verbunden wird. Anders ausgedrückt zeigt die Fig. 3 ein Verfahren 500, bei dem ein Polsterheizelement 14 ohne Heizdrahtträgerelement 22 eingesetzt wird.

Im Übrigen sind die Schritte S501, S502, S504 bis S507 im Wesentlichen gleich, wie oben zur Fig. 1 beschrieben.

In Fig. 3 ist bei dem Umformwerkzeug 50 in der gesonderten Kavität 52 noch eine optionale elektrische Buchse 56 dargestellt. Der Stecker 16 des Polsterheizelements 14 kann insbesondere während des Schritts S503 an dieser Buchse 56 angeschlossen werden. Dies kann nicht nur bei dem in Fig. 3 dargestellten Verfahren 500 erfolgen, sondern auch bei dem in Fig. 1 dargestellten Verfahren, auch wenn in der Fig. 1 die Buchse 56 nicht dargestellt ist.

Bezugnehmend auf das oben beschriebene Verfahren 500 der Fig. 1 kann zum Aktivieren der Beschichtung aus klebendem Material der elektrische Stecker 16 des Polsterheizelements 14 mit der in der gesonderten Kavität 52 angeordneten elektrischen Buchse 56 elektrisch verbunden werden, wobei der Heizdraht 20 während des Umformens (S504, S505) von Strom durchflossen und erwärmt wird.

In ähnlicher Weise kann bei dem zur Fig. 3 beschriebenen Verfahren 500 der elektrische Stecker 16 des Polsterheizelements 14 ebenfalls mit der in der gesonderten Kavität 52 angeordneten elektrischen Buchse 56 elektrisch verbunden werden, wobei der Heizdraht 20 des Polsterheizelements 14 während des Umformens (S504, S505) von Strom durchflossen und erwärmt wird, insbesondere derart, dass der Heizungsdraht (20) eine Temperatur aufweist, die größer ist als eine Schmelztemperatur des wenigstens einen Faservlieselements 12.

Der Vollständigkeit halber wird noch darauf hingewiesen, dass auch beim dem in Fig. 3 beschriebenen Verfahren 500 der abschließende Schritt S506 durchgeführt wird, so dass auch hier ein Polsterelement 10 mit den bereits oben beschriebenen Eigenschaften aus dem Umformwerkzeug 50 entnommen werden kann.

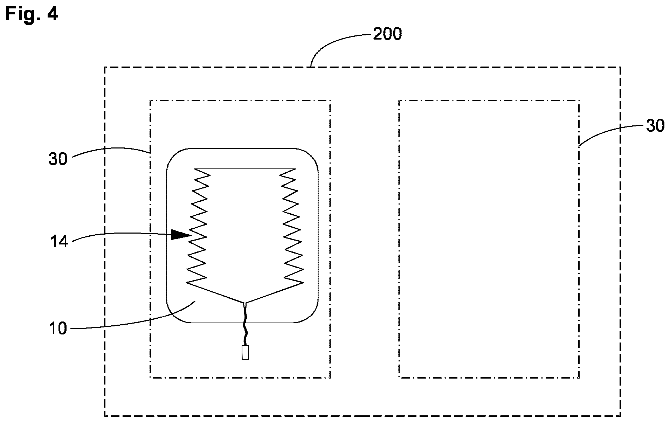

In der Fig. 4 ist vereinfacht und schematisch in einer Draufsicht ein Polsterelement 10 gezeigt mit einem darin materialschlüssig aufgenommenen Polsterheizelement 14.

Aus der Fig. 4 ist ferner ersichtlich, dass ein gemäß dem oben beschriebenen Verfahren 500 hergestelltes Polsterelement 10 Teil eines Fahrzeugsitzes 30 sein kann, der hier als strichpunktiertes Rechteck illustriert ist. Ferner zeigt die Fig. 4 auch, dass ein Kraftfahrzeug 200 wenigstens einen solchen Fahrzeugsitz 30 aufweisen kann.

## Patentansprüche

1. Verfahren (500) zum Herstellen eines Polsterelements (10) eines Fahrzeugsitzes (30), umfassend die Schritte:
Bereitstellen (S501) von wenigstens einem plattenartigen Faservlieselement (12);
Einlegen (S502) von dem wenigstens einen Faservlieselement (12) in ein Umformwerkzeug (50);
Anordnen (S503) von einem elektrischen Polsterheizelement (14) mit wenigstens einem elektrischen Stecker (16) in dem Umformwerkzeug (50), wobei der elektrische Stecker (16) und zumindest ein Abschnitt (18) eines mit dem elektrischen Stecker (16) verbundenen elektrischen Kabels (18k) in einer im Umformwerkzeug (50) ausgebildeten, gesonderten Kavität (52) aufgenommen wird;
Schließen (S504) des Umformwerkzeugs (50), wobei das Polsterheizelement (14) auf dem wenigstens einer Faservlieselement (12) angeordnet ist oder wird;
Aufquellen und Umformen (S505) des wenigstens einen Faservlieselements (12) unter Einfluss von erhöhtem Druck und erhöhter Temperatur, insbesondere durch Einspritzen von einem dampfförmigen Fluid,
insbesondere Wasserdampf, wobei das Polsterheizelement (14) materialschlüssig mit dem wenigstens einen Faservlieselement (12) verbunden wird;
Öffnen (S506) des Umformwerkzeugs (50) und Entnehmen des umgeformten Polsterelements (10) mit dem damit verbundenen Polsterheizelement (14), wobei der elektrische Stecker (16) und der Abschnitt (18) des elektrischen Kabels (18k) aus der gesonderten Kavität (52) entnommen werden und frei beweglich an dem Polsterelement (10) angeordnet sind.

2. Verfahren (500) nach Anspruch 1, wobei das Polsterheizelement (14) einen mit dem elektrischen Stecker (16) und dem Abschnitt (18) des elektrischen Kabels (18k) verbundenen Heizdraht (20) aufweist, wobei der Heizdraht (20) auf einem Heizdrahtträgerelement (22) angeordnet ist, und wobei das Heizdrahtträgerelement (22) auf dem wenigstens einen Faservlieselement (12) in das Umformwerkzeug (50) eingelegt wird (S503).

3. Verfahren (500) nach Anspruch 2, wobei das wenigstens eines Faservlieselement (12) oder/und das Heizdrahtträgerelement (22) eine Beschichtung aus einem temperaturaktivierbarem oberflächlich klebenden Material aufweisen, derart, dass das Heizdrahtträgerelement (22) und das wenigstens eine Faservlieselement (12) in dem geschlossenen Umformwerkzeug (50) materialschlüssig miteinander verbunden werden.

4. Verfahren (500) nach Anspruch 3, wobei zum Aktivieren der Beschichtung aus klebendem Material ein Wärmeeintrag in dem Umformwerkzeug (50) erfolgt.

5. Verfahren (500) nach Anspruch 3 oder 4, wobei zum Aktivieren der Beschichtung aus klebendem Material der elektrische Stecker (16) des Polsterheizelements (14) mit einer in der gesonderten Kavität (52) angeordneten elektrischen Buchse (56) elektrisch verbunden wird und wobei der Heizdraht (20) während des Umformens (S504,S505) von Strom durchflossen und erwärmt wird.

6. Verfahren (500) nach Anspruch 1, wobei das Polsterheizelement (14) einen mit dem elektrischen Stecker (16) und dem Abschnitt (18) des elektrischen Kabels (18k) verbundenen Heizdraht (20) aufweist, wobei der Heizdraht (20) bei geöffnetem Umformwerkzeug (50) an einer Werkzeughälfte (50a) des Umformwerkzeugs (50) fixiert wird, insbesondere mittels mehrerer Fixierdorne (54).

7. Verfahren (500) nach Anspruch 6, wobei der Heizdraht (20) beim Schließen (S504) des Umformwerkzeugs (50) unmittelbar auf dem wenigstens einen Faservlieselement (12) angeordnet wird und materialschlüssig mit diesem verbunden wird.

8. Verfahren (500) nach Anspruch 6 oder 7, wobei der elektrische Stecker (16) des Polsterheizelements (14) mit einer in der gesonderten Kavität (52) angeordneten elektrischen Buchse (56) elektrisch verbunden wird und wobei der Heizdraht (20) während des Umformens (S504, S505) von Strom durchflossen und erwärmt wird, insbesondere derart, dass der Heizungsdraht (20) eine Temperatur aufweist, die größer ist als eine Schmelztemperatur des wenigstens einen Faservlieselements (12).

9. Fahrzeugsitz (30) mit wenigstens einem Polsterelement (10), das entsprechend dem Verfahren (500) gemäß einem der vorhergehenden Ansprüche hergestellt worden ist, wobei das Polsterelement (10) mit Polsterheizelement (14) ein Sitzpolster oder/und ein Rückenpolster oder/und ein Wangenpolster ist.

10. Kraftfahrzeug (200) mit wenigstens einem Fahrzeugsitz (30) gemäß Anspruch 9.
